# EUROPÄISCHE PATENTANMELDUNG

(11) **EP 2 028 625 A2**
(43) Veröffentlichungstag der Anmeldung: **25.02.2009**
(21) Anmeldenummer: 08014751.5
(22) Anmeldetag: 20.08.2008
(51) Int. Cl.: G07C 3/00, G06Q 10/00

(54) **Packmittel mit gekoppelter Telematik- und Sensoreinheit und Verfahren zur Überwachung von Packmitteln**

(30) Priorität: 21.08.2007 DE 102007039508
(71) Anmelder: Ucon AG Containersysteme Kg, 77756 Hausach (DE)
(72) Erfinder: Metzler, Clemens, 77736 Zell am Harmersbach (DE); Obert, Albert, 77716 Hofstetten (DE); Rehm, Rainer, 77709 Wolfach (DE)
(74) Vertreter: Neunert, Peter Andreas

(57) **Zusammenfassung**

Packmittel (100) mit einer am Packmittel (100) oder an einem mit dem Packmittel (100) verbundenen Gestell (102) angeordneten Telematikeinheit (112), wobei die Telematikeinheit (112) in Signalkommunikation mit einer Sensoreinheit (108) mit mindestens einem Sensor steht, der zur Messung von Eigenschaften des Packmittels (100) oder der in dem Packmittel enthaltenen Füllung und Weiterleitung dieser Daten an die Telematikeinheit (112) ausgelegt ist, und wobei die Telematikeinheit (112) Mittel zur Verarbeitung und/oder Weiterleitung von durch die Sensoreinheit (108) übermittelten Daten an eine Telematikzentrale aufweist und Verfahren zur Überwachung eines Packmittels (100), mit zumindest den Schritten Messung von Daten betreffend den Zustand des Packmittels (100) und/oder des in seinem Inneren befindlichen Materials durch eine Sensoreinheit (108) und Weiterleitung der gemessene Daten durch eine Telematikeinheit (112) über ein Telekommunikationssystem an eine Telematikzentrale.

## Beschreibung

Die Erfindung betrifft ein Packmittel gemäß dem Oberbegriff des Patentanspruchs 1 und ein Verfahren zur Überwachung von Packmitteln gemäß dem Oberbegriff des Patentanspruchs 10.

Eine Vielzahl unterschiedlichster Substanzen wird im Warenverkehr in Packmitteln transportiert. Unter den Begriff Packmittel fallen dabei beispielsweise Tank-Behälter und Schüttgut-Container. In der Regel werden die Packmittel, die für diese Art des Gütertransports benutzt werden, mehrfach verwendet. Der Hersteller der Substanz befüllt das Packmittel und liefert das befüllte Packmittel -gegebenenfalls unter Zwischenschaltung eines Zwischenhändlers und/oder Spediteursan seinen Kunden aus. Der Kunde entnimmt die Substanz über einen gewissen Zeitraum hinweg, bis das Packmittel entleert ist und vom Hersteller oder dem von diesem beauftragten Spediteur und/oder Zwischenhändler wieder abgeholt wird.

Aus dem Stand der Technik, z.B. der DE 198 05 465 A1 ist bekannt, Materialtransporte bzw. Materialflüsse mit Hilfe eines Telematiksystems zu steuern und zu überwachen.

In der DE 198 05 465 A1 sind die Telematikeinheiten als mit LKWs verbundene Geräte ausgeführt. Dabei sind gemäß der Lehre dieser Druckschrift zu jedem Zeitpunkt die Position des LKW und die Fracht, die er transportiert, abrufbar, was die Qualitätssicherung des Logistikprozesses unter Verwendung dieses Systems erleichtert. Unabhängig von den LKW ist das Telematiksystem der DE 198 05 465 A1 jedoch nicht betreibbar, da dann keine Energieversorgung mehr bereitgestellt ist.

Es ist auch bekannt, derartige Telematikeinheiten in Verbindung mit mobilen Systemen zu betreiben, die keine oder keine dauerhafte Energieversorgung bereitstellen, wie z.B. an Trailern oder Containern. In diesem Fall wird zumindest phasenweise die Energieversorgung durch einen Akku, eine Batterie oder ein Solarpanel sichergestellt.

Während es mit solchen vorbekannten Systemen möglich ist, den aktuellen Aufenthaltsort eines Packmittels zu bestimmen, was zur Qualitätssicherung des Transportguts beiträgt, da seine Nachverfolgung und Überwachung und damit insbesondere eine Sicherung gegen Diebstahl ermöglicht werden, reicht diese Information für sich betrachtet nicht aus, um die notwendigen Logistikprozesse zu optimieren. Zwar hat beispielsweise ein Lieferant die Information, dass entlang einer bestimmten Fahrtroute eine gegebene Zahl von Packmitteln zu finden ist, er kann aber bestenfalls auf der Basis von Erfahrungswerten abschätzen, wie viele dieser Packmittel aktuell ausgetauscht werden müssen, beispielsweise weil sie inzwischen entleert sind oder sich wesentliche Eigenschaften des in den Packmitteln enthaltenen Materials durch Umwelteinflüsse verändert haben. Dieser statistische Ansatz führt unter Umständen zu einer nicht optimalen Disposition und erhöhten Betriebskosten.

Man betrachte als konkretes Beispiel vier Chemiewerke A, B, C und D, die normalerweise jede Woche jeweils 10 1000 Liter-Tanks einer Chemikalie verarbeiten, um die lokale Nachfrage nach einem gegebenen chemischen Produkt zu befriedigen. Der Lieferant der Chemikalie verfügt über einen LKW, auf den 10 Tanks passen und tauscht einmal wöchentlich die geleerten Tanks gegen volle Tanks aus. Fällt nun die Produktion des Werks A wegen eines Defektes aus, können die am nächsten zum Werk A gelegenen Werke B und C jeweils 15 1000 Liter-Tanks der Chemikalie verarbeiten, A hingegen verarbeitet nichts mehr.

Ohne diese Information schickt der Lieferant seinen LKW vergeblich zu Werk A und muss außerdem noch eine Extrafahrt durchführen, um den erhöhten Austauschbedarf bei B und C zu befriedigen.

Die Aufgabe der Erfindung besteht darin, ein Packmittel, das diese logistischen Nachteile durch seine technische Ausgestaltung vermeidet sowie ein Verfahren zur Überwachung eines solchen Packmittels bereitzustellen. Diese Aufgabe wird gelöst durch ein Packmittel mit den Merkmalen des Patentanspruchs 1 und ein Verfahren zur Überwachung von Packmitteln mit den Merkmalen des Patentanspruchs 10. Vorteilhafte Ausgestaltungen und Weiterbildungen der Erfindung sind in den Unteransprüchen angegeben.

Der Erfindung liegt die Erkenntnis zugrunde, dass durch die Kombination einer Telematikeinheit am Packmittel mit einer Sensoreinheit, die Eigenschaften des Packmittels und/oder des Inhalts des Packmittels überwacht, möglich ist, diese Informationen über den aktuellen Zustand in die Disposition einzubeziehen.

Ein solches Telematiksystem weist insbesondere eine Telematikzentrale und mobile Telematikeinheiten auf, die über ein Telekommunikationssystem miteinander verbunden sind.

Telematikeinheiten bestehen grundsätzlich aus einem Rechnerkern zur Steuerung der Aufzeichnung und Auswertung von Informationen, einem Kommunikationsmodul zur Datenübertragung und einer Energiequelle. Mittels der Telematikzentrale ist der Zugriff auf die Informationen bzw. auf das Ergebnis der Auswertung der Informationen möglich; in der Regel ermöglicht sie auch die Übermittlung von Kommandos oder Informationen an die einzelnen Telematikeinheiten.

Das erfindungsgemäße Packmittel weist daher eine am Packmittel oder an einem mit dem Packmittel vorzugsweise fest verbundenen Gestell angeordnete Telematikeinheit auf, die in Signalkommunikation mit einer Sensoreinheit mit mindestens einem Sensor steht, der zur Messung von Eigenschaften des Packmittels oder der in dem Packmittel enthaltenen Füllung und Weiterleitung dieser Daten an die Telematikeinheit ausgelegt ist, wobei die Telematikeinheit Mittel zur Verarbeitung und/oder Weiterleitung von durch den Sensor übermittelten Daten an eine Telematik-Zentrale aufweist. Durch diese Ausgestaltung ist es möglich, neben der Position relevante Daten zum Zustand des Packmittels oder seiner Füllung weiterzuleiten. Beispielsweise könnte ein vorgesehener Füllstandssensor den aktuellen Füllstand es Packmittels ermitteln und dieser Wert dann über die Telematikeinheit an die Telematikzentrale weitergeleitet werden. Bei der Verwendung eines erfindungsgemäßen System im obigen Beispiel der Versorgung der vier Chemiefirmen wären alle benötigten Informationen zum Füllzustand der Packmittel über die Telematikzentrale zugänglich gewesen, der Lieferant hätte also einen LKW statt zu A zu B und zu C geschickt.

Gemäß einer bevorzugten Ausführungsform weist die Sensoreinheit einen Füllstandssensor und/oder einen Drucksensor und/oder einen Temperatursensor auf. Damit wird es möglich, beim Über- oder Unterschreiten einer Temperatur oder eines Druckes, bei der bzw. bei dem beispielsweise in einem gegebenen Material eine unerwünschte Zustandsänderung abläuft, ein entsprechendes Warnsignal an die Telematikzentrale weiterzuleiten. Es sind auch eine Vielzahl anderer Sensoren denkbar, die je nachdem, mit welchem Material das Packmittel befüllt ist, zum Einsatz kommen.

In einer weiteren bevorzugten Ausführungsform weist die Telematikeinheit eine autarke Energieversorgung auf. Damit ist es nicht mehr nötig, eine externe Energieversorgung für das Packmittel bereitzustellen. Konkret kann es sich dabei beispielsweise um einen Akku, eine Batterie oder ein Solarpanel handeln.

Die Signalkommunikation zwischen Sensoreinheit und Telematikeinheit kann beispielsweise über eine Sensorleitung oder mittels drahtloser Kommunikation durchgeführt werden. Welche dieser Alternativen vorteilhafter ist, hängt von den Bedingungen ab, unter denen das Packmittel eingesetzt wird.

Eine vorteilhafte Möglichkeit, den Aufenthaltsort des Packmittels jederzeit genau ermitteln zu können kann dadurch geschaffen werden, dass die Telematikeinheit eine GPS-Antenne aufweist.

Die Kommunikation mit der Telematikzentrale erfolgt in einer besonders bevorzugten Ausführungsform mit einer Übertragungseinheit oder einer Auswerte- und Übertragungseinheit, die in einen Elektronikadapter aufgenommen ist und insbesondere unter Vorsehung eines Elektronikadapters, der zur Aufnahme unterschiedlicher Auswerte- und Übertragungseinheiten ausgelegt ist. Dadurch wird das Austauschen der Übertragungs- oder Auswerte- und Übertragungseinheit möglich. Dies ist besonders dann von Interesse, wenn das Packmittel zu unterschiedlichen Zeitpunkten mit unterschiedliche Materialien befüllt ist. Handelt es sich dabei beispielsweise einmal um ein temperaturempfindliches Material und einmal um ein druckempfindliches Material, kann durch einfaches Austauschen der Auswerte- und Übertragungseinheit die notwendige Änderung des Betriebsmodus durchgeführt werden. Umgekehrt ist es dadurch möglich, Steuersignale, die von der Telematikzentrale gesendet werden in entsprechend angepasster Form an den jeweiligen Sensor weiterzuleiten.

Es hat sich weiter als vorteilhaft erwiesen, wenn die Telematikeinheit des Packmittels einen Transponder aufweist. Mittels dieses Transponders, der zur Identifikation eines gegebenen Packmittels dient, kann beschrieben und/oder ausgelesen werden, wenn das Packmittel bestimmte, vorgegebene Positionen durchläuft, z.B. ein Lesegerät am Ende einer Reinigungsanlage, in einem Lager oder dergleichen. Diese Daten werden ebenfalls an die Telematikzentrale übertragen und können einem Zugriffsberechtigten z.B. über ein Web-Portal zugänglich gemacht werden.

Gemäß dem erfindungsgemäßen Verfahren zur Überwachung von Packmitteln werden neben Positionsdaten auch durch eine Sensoreinheit gemessene Daten betreffend den Zustand des Packmittels und/oder des in seinem Inneren befindlichen Materials durch eine Telematikeinheit über ein Telekommunikationssystem, z.B. GSM, an eine Telematikzentrale weitergeleitet. Dadurch werden ohne Eingriff in die laufende Verwendung des Packmittels Informationen bereitgestellt, die den Betrieb eines Lager- und/oder Logistiksystems über die Grenzen der statischen Lagerhaltung hinaus ermöglichen.

Besonders bevorzugt ist eine Ausführungsform des Verfahrens, bei der die Telematikzentrale die ihr zugehenden Informationen berechtigten Anwendern zugänglich macht. Dies kann auf besonders einfache Weise über ein Web-Portal geschehen, was den Zugriff auf die Daten zu jedem Zeitpunkt und von einer Vielzahl unterschiedlicher Orte aus erlaubt.

Weiter ist es vorteilhaft, zumindest die bei der Telematikzentrale eingehenden Daten zu archivieren und gegebenenfalls ebenfalls einem berechtigten Nutzer zugänglich zu machen. Dies ist nicht nur zur Überwachung des Lebenszyklus der Packmittel hilfreich, sondern gerade im Hinblick auf die Verwendung eines Packmittels für Lebensmittel oder Gefahrgüter ein wesentlicher Vorteil.

Eine vorteilhafte Ergänzung des in der Telematikzentrale vorhandenen Datenbestandes wird dadurch erreicht, dass das Packmittel zusätzlich mit einem Transponder versehen ist, der zur Identifikation des Packmittels dient und beschrieben und/oder ausgelesen werden kann, wenn das Packmittel bestimmte, vorgegebene Positionen durchläuft, z.B. ein Lesegerät am Ende einer Reinigungsanlage, in einem Lager oder dergleichen und das Durchlaufen dieser Position an die Telematikzentrale gemeldet wird.

Es hat sich als sinnvoll erwiesen, zumindest einen Teil der Daten in einem durch den berechtigten Nutzer vorgebbaren Rhythmus automatisch von der Telematikeinheit zur Telematikzentrale zu übertragen, um den Energieverbrauch des Systems im Vergleich zu einer kontinuierlichen Datenübertragung zu senken. Mindestens ein Sensor der Sensoreinheit kann dabei entweder kontinuierlich messen, was zur Überwachung eines Parameters wie beispielsweise der Temperatur im Inneren des Packmittels sinnvoll sein kann, oder mindestens ein Sensor der Sensoreinheit kann nur zu einzelnen Zeitpunkten durch ein der Sensoreinheit zugeleitetes Steuerkommando aktiviert werden, was einen energiesparenderen Betrieb ermöglicht. In diesem Fall wird darüber hinaus zweckmäßigerweise die Funktion bereitgestellt, dass der berechtigte Nutzer zu einem von ihm gewünschten Zeitpunkt eine Sensorabfrage initiieren kann, beispielsweise über ein Web-Portal, in dem auch die durch die Telematikzentrale verwalteten Daten abrufbar sind.

Die Erfindung wird anhand der nachfolgenden Figuren, die eine spezielle Ausführungsform der Erfindung darstellen, ausführlich erläutert. Es zeigt
- Fig. 1:: eine Überblicksdarstellung eines Packmittels mit gekoppelter Telematik- und Sensoreinheit
- Fig. 2:: eine Explosionszeichnung einer Telematikeinheit
- Fig. 3:: ein Weg-Zeit-Diagramm eines Logistikprozesses
- Fig. 4:: ein Flussdiagramm eines Logistikprozesses.

Gleiche Bauteile wurden in allen Figuren mit demselben Bezugszeichen versehen.

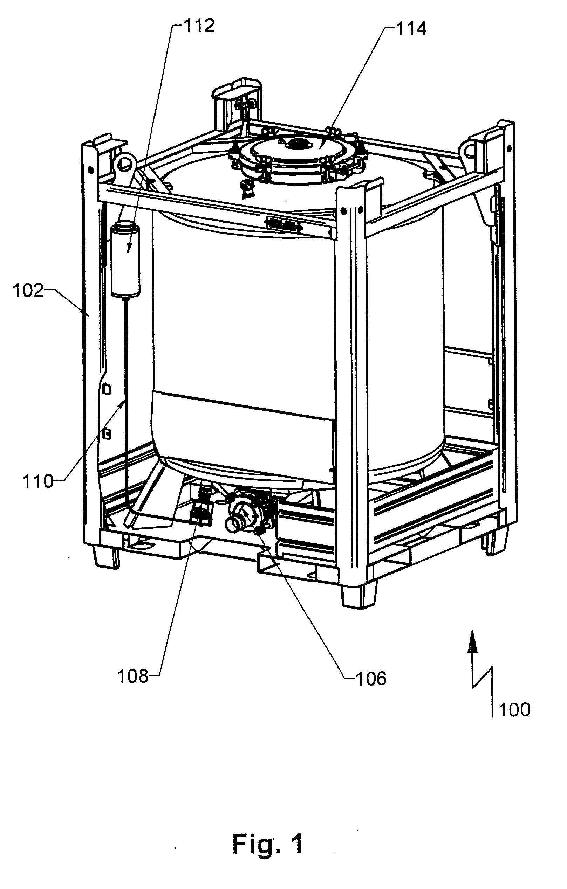

Figur 1 zeigt eine Ausführungsform eines erfindungsgemäßen Packmittels 100. Das Packmittel 100 ist mit einem Gestell 102 verbunden, es weist eine verschließbare Befüllöffnung 104 und einen Entleermechanismus 106 auf. Darüber hinaus ist eine Sensoreinheit 108 vorgesehen, mit der über mindestens einen an ihr angeordneten Sensor Daten aus dem Containerinneren, z.B. Füllstand, Pegel, Druck oder Temperatur, bestimmbar sind. Die Sensoreinheit 108 ist über eine Sensorleitung 110 mit einer Telematikeinheit 112 verbunden, über die die durch die Sensoranordnung 108 bestimmten Daten an die Telematikeinheit 112, aber auch durch die Telematikeinheit 112 empfangene Steuersignale an die Sensoranordnung 108 übertragbar sind.

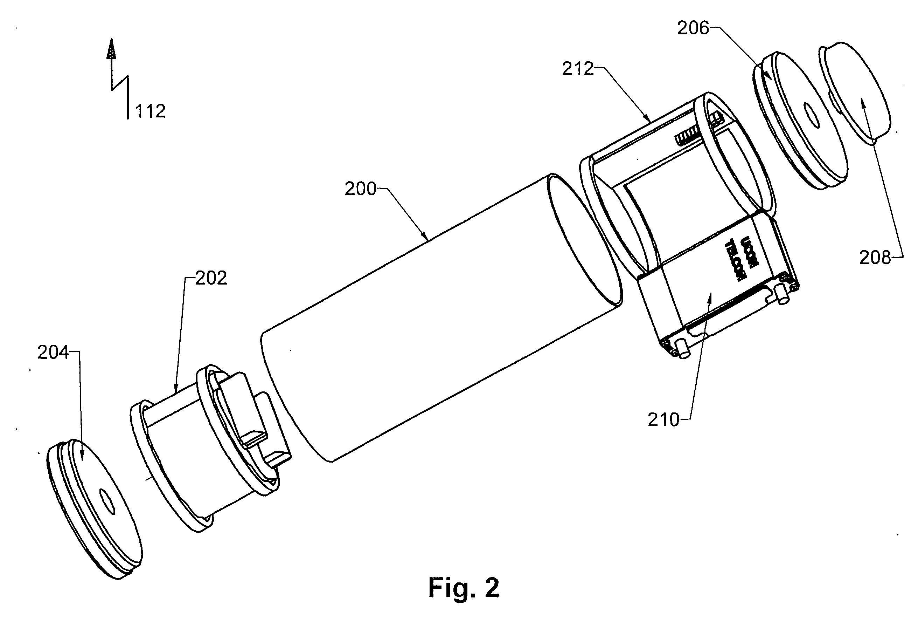

Figur 2 zeigt eine Explosionszeichnung einer Ausführungsform einer Telematikeinheit 112. Die Telematikeinheit 112 weist ein Gehäuse 202 mit einem unteren Verschlussdeckel 204 und einem oberen Verschlussdeckel 206 auf. Gemäß dem Ausbildungsbeispiel der Figur 2 weist der untere Verschlussdeckel ein Loch auf, durch das insbesondere ein Signalkabel zur Signalkommunikation mit einer in der Figur 2 nicht dargestellten Sensoreinheit hindurchführbar ist. Es ist aber auch eine drahtlose Signalübertragung zwischen Telematikeinheit und Sensoreinheit möglich.

Auf der oberen Seite des oberen Verschlussdeckels 206 ist eine GPS-Antenne 208 angeordnet, die die Bestimmung des Ortes, an dem sich das nicht dargestellte Packmittel, an dem die Telematikeinheit 112 befestigt ist, befindet.

Im Inneren des Gehäuses 201 ist eine Batterie 204 angeordnet, die notwendig ist, um die autarke Funktion der Telematikeinheit sicherzustellen. Darüber hinaus befindet sich im Gehäuse 202 eine Auswerte- und Übertragungseinheit 210, die in einen Elektronikadapter 212 aufgenommen ist. Die Auswerte- und Übertragungseinheit 210 stellt über ein nicht gezeigtes Telekommunikationssystem, den Datenaustausch zwischen Telematikzentrale und Telematikeinheit 112 sicher und wertet Sensorsignale aus, etwa im Hinblick auf das Überschreiten oder Unterschreiten eines Schwellwertes, was dann zum Auslösen eines Alarms führen kann. Durch sie wird auch eine Sensorabfrage, die von einem Nutzer beispielsweise über einen Web-Browser initiiert und an die Telematikzentrale weitergeleitet wurde von letzterer empfangen und in einen Steuerbefehl an die Sensoranordnung übersetzt.

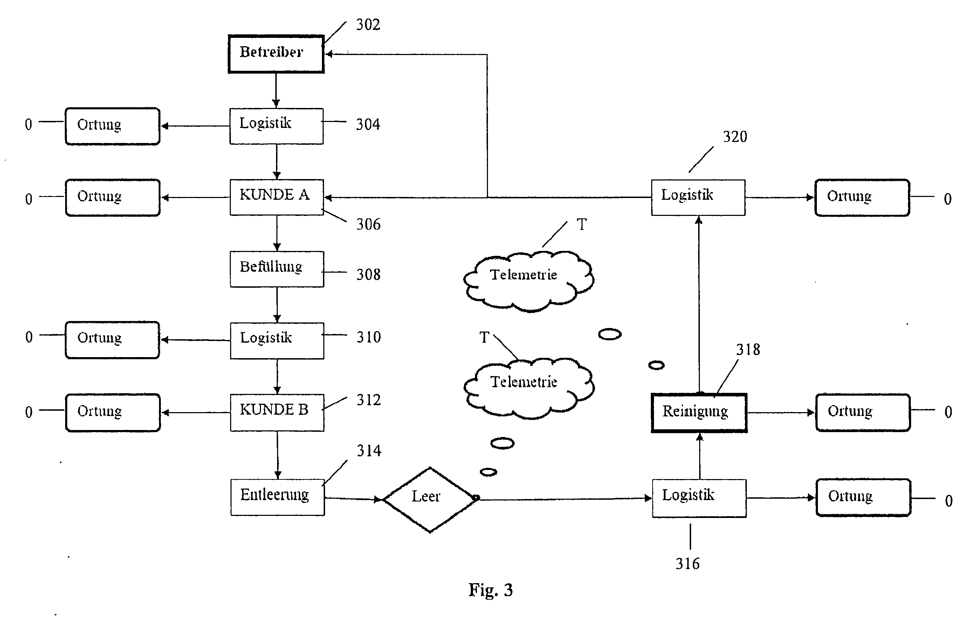

Figur 3 zeigt ein Flussdiagramm eines Logistikprozesses 300 unter Verwendung eines erfindungsgemäßen Packmittels bzw. unter Verwendung eines erfindungsgemäßen Verfahrens dar, der das Wesen der Erfindung und ihre Vorteile weiter veranschaulicht.

Ein Betreiber 302 vertreibt erfindungsgemäße Packmittel zum Kauf und/oder zur Miete. Er macht Geschäfte mit dem Kunden A 306. Das Ausliefern der Packmittels bringt einen ersten Logistikprozess 304 mit sich; während des Ablaufens dieses Prozesses lässt sich zu jedem Zeitpunkt sowohl vom Betreiber 302 als auch vom Kunden A 306 über die Ortungsfunktion O nachvollziehen, und zwar vorzugsweise über ein Web-Portal, das vom Betreiber 302 betrieben wird. Während der Betreiber 302 stets Zugriff auf die Daten aller Packmittel hat, ist der Zugriff auf die Informationen für den Kunden A 306 aber sinnvollerweise auf diejenigen Packmittel beschränkt, die er gekauft oder angemietet hat.

Kunde A 306 ist Hersteller eines Materials, das er in den durch den Betreiber bereitgestellten Packmitteln vertreibt. Daher befüllt er das Packmittel, verkauft dann das Material im Packmittel an seinen Kunden B 312 und liefert aus. Dies bringt einen zweiten Logistikprozess 310 mit sich, der ebenfalls über die Ortungsfunktion im Web-Portal nachvollziehbar ist. Falls gewünscht, kann der Kunde B 312 ebenfalls Zugriff auf die Daten der Packmittel erhalten, die das an ihn verkaufte Material enthalten.

Kunde B verarbeitet das gelieferte Material nach und nach, so dass es zu einer fortschreitenden Entleerung 314 des Packmittels kommt. Wenn das erfindungsgemäße Packmittel einen Füllstandssensor aufweist, dessen Messdaten mittels der Telemetriefunktion T an die Telematik-Zentrale übermittelt werden, kann die Entleerung 314 über eine Gerätestatusseite des Web-Portals mitverfolgt werden. Für den Kunden B 312 bietet dies den Vorteil eines komfortablen Überblicks über seine aktuellen Lagerbestände. Auch für den Kunden A 306 ist diese Möglichkeit aus zwei von Gründen überaus vorteilhaft:

Erstens kann er in der Regel bereits mit einigem zeitlichen Vorlauf absehen, wann die nächste Charge des Materials hergestellt sein muss und zeitlich angepasst seinen nächsten Produktionszyklus fahren, so dass er weniger Material vorhalten muss, um zu möglichst unverzüglicher Lieferung in der Lage zu sein. Dies geht besonders gut, wenn er den Verbrauch gestützt auf eine Serie von Messwerten des Füllstands zu festgelegten Zeitpunkten stützen kann, also wenn in einem festlegbaren Rhythmus Messwerte durch die Sensoreinrichtung gemessen und über die Telematikeinheit der Telematikzentrale übermittelt werden. Zusätzlich ist es aber auch sinnvoll, wenn das Auslösen eines Messvorgangs zu einem gewünschten Zeitpunkt, beispielsweise durch ein Anklicken auf der Gerätestatusseite des Web-Portals, möglich ist.

Zweitens kann der Kunde A 306 feststellen, wann er entleerte Packmittel vom Kunden B 312 wieder abholen muss, d.h. er kann den dazu notwendigen Logistikprozess frühzeitig einleiten und beispielsweise mit notwendigen Fahrten zu anderen Kunden in der Nähe des Kunden B 312 kombinieren, was zu einer Reduktion von Standzeiten, somit also einer effizienteren Nutzung der Packmittel und einer verbesserten Auslastung der Transportflotte führt.

Alternativ, allerdings für das hier verwendete Beispiel weniger vorteilhaft wäre die Verwendung einer Konfiguration des Systems, in der der Füllstand kontinuierlich oder zu diskreten Zeitpunkten durch den Füllstandssensor überwacht wird und eine Warnmeldung ausgegeben wird, wenn ein Grenzfüllstand unterschritten wurde oder wenn das Packmittel entleert ist. Allerdings kann eine solche Konfiguration beispielsweise in einem Fall sehr sinnvoll sein, in dem ein temperaturempfindliches Material, das zur Weiterverarbeitung nicht mehr geeignet ist, nachdem es eine Grenztemperatur erreicht hatte, in einem entsprechenden Packmittel versandt oder bevorratet wird. Hier kann durch eine kontinuierliche Auswertung der mittels der Sensoreinheit bestimmten Daten in einer Auswerte- und Übertragungseinheit sichergestellt werden, dass nur noch verwendbares Material zur Anwendung kommt, wodurch Produktionsausfälle und nachträgliche Fehleranalysen von vorneherein vermieden werden.

Das entleerte Packmittel muss in der Regel vor einer erneuten Benutzung gereinigt werden; dementsprechend wird ein dritter, ebenso wie zuvor der erste Logistikprozess 304 und der zweite Logistikprozess 310 nachvollziehbarer Logistikprozess 316 durchgeführt, der das Packmittel zur Reinigung 318 überführt. Für manche Reinigungsprozesse und manche Packmittel ist prinzipiell eine Überwachung durch einen geeigneten Sensor möglich, beispielsweise wenn eine Innenwand des Packmittels nur im gereinigten Zustand eine hinreichende Reflektivität aufweist. Andernfalls kann ein mit einem Transponder ausgerüstetes Packmittel verwendet werden, der mit verschiedenen, packmittelspezifischen Identifikationsmerkmalen beschrieben und ausgelesen werden kann. Der Transponder wird auch nach Durchlaufen bestimmter Positionen, z.B. an einem Lesegerät am Anfang oder Ende einer Reinigungsanlage oder am Zugang zu einem Lager erfasst und gelesen. Diese Daten werden ebenfalls an das Web-Portal übertragen und stehen für berechtigte Benutzer zur Verfügung. Auf diese Weise ist für den Kunden A 306 also nicht nur klar, dass sich sein Packmittel gerade bei der Reinigung befindet, sondern auch zu jedem Zeitpunkt feststellbar, ob die Reinigung eines gegebenen Behälters bereits erfolgt ist, und er kann basierend auf dieser Information den vierten Logistikprozess 320, bestehend aus der Abholung von der Reinigung 318 und Rückgabe des Packmittels an den Betreiber 302 oder zur Wiederverwendung an den Kunden A 306, optimiert initiieren. Essentiell ist dabei, dass neben den Ortsinformationen über die Ortungsfunktion O des Behälters auch Statusinformationen und Messdaten über die Telemetriefunktion T übertragen werden, was durch die Erfindung ermöglicht wird.

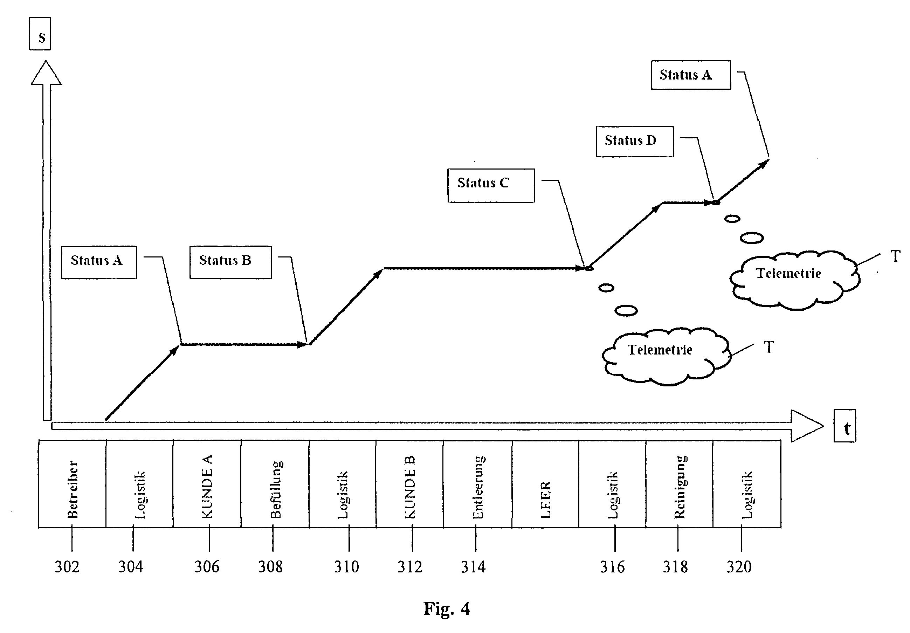

Figur 4 zeigt ein Weg-Zeit-Diagramm des Logistikprozesses aus Figur 3, wobei auf der Zeitachse die Schritte aus dem Flussdiagramm mit gleichen Bezugszeichen aufgetragen sind. Aus dieser Darstellung geht anschaulich hervor, dass eine bloße Ortsbestimmung zwingend nicht zu einer vollständigen Optimierung des Logistikprozesses führen kann, da diese nicht geeignet ist, den Zeitpunkt, zu dem ein Logistikprozess initiiert werden muss, festzulegen. Kritisch ist hingegen das Vorsehen von Kriterien, die die Einleitung eines solchen Prozesses definieren. Da diese Kriterien mit dem Zustand des Packmittels oder seines Inhalts zusammenhängen bzw. Änderungen des Status des Packmittels oder seines Inhalts zwischen solchen, müssen Statusinformationen, die durch entsprechend angepasste Sensorik zugänglich sind, in den Telematikprozess einbezogen werden.

Durch die erfindungsgemäße Ergänzung der bekannten Möglichkeit zur Positionsüberwachung durch Übertragung auch von Sensorsignalen über eine Telematikeinheit kann also eine erhebliche Qualitätsverbesserung sowohl der Logistik -hier insbesondere eine Optimierung der Disposition der Packmittel und der Auslastung der Transportfahrzeuge, eine Umlaufsteigerung das Gewährleisten einer zeitnahen Reinigung der Packmittel- als auch des Transportgutes durch Überwachung seines Zustands erzielt werden.

### Bezugszeichenliste

- 100: Packmittel
- 102: Gestell
- 104: Befüllöffnung
- 106: Entleermechanismus
- 108: Sensoreinheit
- 110: Sensorleitung
- 112: Telematikeinheit

- 202: Gehäuse
- 204: unterer Verschlussdeckel
- 206: oberer Verschlussdeckel
- 208: GPS-Antenne
- 210: Auswerte- und Übertragungseinheit
- 212: Elektronikadapter

- 302: Betreiber
- 304: erster Logistikprozess
- 306: Kunde A
- 308: Befüllung
- 310: zweiter Logistikprozess
- 312: Kunde B
- 314: Entleerung
- 316: dritter Logistikprozess
- 318: Reinigung
- 320: vierter Logistikprozess
- O: Ortungsfunktion
- T: Telemetriefunktion

## Patentansprüche

1. Packmittel (100) mit einer am Packmittel (100) oder an einem mit dem Packmittel (100) verbundenen Gestell (102) angeordneten Telematikeinheit (112),
**dadurch gekennzeichnet, dass** die Telematikeinheit (112) in Signalkommunikation mit einer Sensoreinheit (108) mit mindestens einem Sensor steht, der zur Messung von Eigenschaften des Packmittels (100) oder der in dem Packmittel enthaltenen Füllung und Weiterleitung dieser Daten an die Telematikeinheit (112) ausgelegt ist, wobei die Telematikeinheit (112) Mittel zur Verarbeitung und/oder Weiterleitung von durch die Sensoreinheit (108) übermittelten Daten an eine Telematikzentrale aufweist.

2. Packmittel (100) nach einem vorstehenden Anspruch,
**dadurch gekennzeichnet, dass** die Sensoreinheit (108) einen Füllstandssensor und/oder einen Drucksensor und/oder einen Temperatursensor aufweist.

3. Packmittel (100) nach Anspruch 1,
**dadurch gekennzeichnet, dass** die Telematikeinheit (112) eine autarke Energieversorgung aufweist.

4. Packmittel (100) nach Anspruch 3,
**dadurch gekennzeichnet, dass** die autarke Energieversorgung ein Akku, eine Batterie oder ein Solarpanel aufweist.

5. Packmittel (100) nach einem vorstehenden Anspruch,
**dadurch gekennzeichnet, dass** eine Sensorleitung (110) oder Mittel zur drahtlosen Kommunikation als Verbindung zwischen Sensoreinheit (108) und Telematikeinheit (112) vorgesehen sind.

6. Packmittel (100) nach einem vorstehenden Anspruch,
**dadurch gekennzeichnet, dass** die Telematikeinheit (112) eine GPS-Antenne aufweist.

7. Packmittel (100) nach einem vorstehenden Anspruch,
**dadurch gekennzeichnet, dass** die Telematikeinheit (112) eine Übertragungseinheit oder eine Auswerte- und Übertragungseinheit (210) zur Kommunikation mit der Telematikzentrale aufweist, die in einen Elektronikadapter (212) aufgenommen ist.

8. Packmittel (100) nach Anspruch 7,
**dadurch gekennzeichnet, dass** der Elektronikadapter (212) zur Aufnahme unterschiedlicher Auswerte- und Übertragungseinheiten (210) ausgelegt ist.

9. Packmittel (100) nach einem vorstehenden Anspruch,
**dadurch gekennzeichnet, dass** die Telematikeinheit (112) einen Transponder aufweist.

10. Verfahren zur Überwachung eines Packmittels (100), mit zumindest den Schritten
Messung von Daten betreffend den Zustand des Packmittels (100) und/oder des in seinem Inneren befindlichen Materials durch eine Sensoreinheit (108), und Weiterleitung der gemessene Daten durch eine Telematikeinheit (112) über ein Telekommunikationssystem an eine Telematikzentrale.

11. Verfahren zur Überwachung eines Packmittels (100) nach Anspruch 10,
**dadurch gekennzeichnet, dass** die der Telematikzentrale zugeleiteten Daten berechtigten Anwendern zugänglich gemacht werden.

12. Verfahren zur Überwachung eines Packmittels (100) nach Anspruch 11,
**dadurch gekennzeichnet,** die der Telematikzentrale zugeleiteten Daten berechtigten Anwendern über ein Web-Portal zugänglich gemacht werden.

13. Verfahren zur Überwachung eines Packmittels (100) nach Anspruch 10,
**dadurch gekennzeichnet**, zumindest die bei der Telematikzentrale eingehenden Daten archiviert werden.

14. Verfahren zur Überwachung eines Packmittels (100) nach Anspruch 13,
**dadurch gekennzeichnet, dass** die archivierten Daten berechtigten Anwendern zugänglich gemacht werden.

15. Verfahren zur Überwachung eines Packmittels (100) nach einem der Ansprüche 10 bis 14,
**dadurch gekennzeichnet, dass** das Packmittel (100) zusätzlich mit einem Transponder versehen ist, der zur Identifikation des Packmittels (100) dient und beschrieben und/oder ausgelesen werden kann, wenn das Packmittel (100) bestimmte, vorgegebene Positionen durchläuft, und dass das Durchlaufen dieser Position an die Telematikzentrale gemeldet wird.

16. Verfahren zur Überwachung eines Packmittels (100) nach einem der Ansprüche 10 bis 15,
**dadurch gekennzeichnet, dass** zumindest einen Teil der Daten in einem durch den berechtigten Nutzer vorgebbaren Rhythmus automatisch von der Telematikeinheit (112) zur Telematikzentrale übertragen wird.

17. Verfahren zur Überwachung eines Packmittels (100) nach einem der Ansprüche 10 bis 16,
**dadurch gekennzeichnet, dass** mindestens ein Sensor der Sensoreinheit (108) kontinuierlich misst.

18. Verfahren zur Überwachung eines Packmittels (100) nach einem der Ansprüche 10 bis 16,
**dadurch gekennzeichnet, dass** mindestens ein Sensor der Sensoreinheit (108) nur zu einzelnen Zeitpunkten durch ein der Steuereinheit (108) zugeleitetes Steuerkommando aktiviert wird.

19. Verfahren zur Überwachung eines Packmittels (100) nach Anspruch 18,
**dadurch gekennzeichnet, dass** der berechtigte Nutzer zu einem von ihm gewünschten Zeitpunkt eine Sensorabfrage initiieren kann.
